**Europäisches Patentamt**

**European Patent Office**

**Office européen des brevets**

(11) Veröffentlichungsnummer: **0 235 605**
**B1**

# EUROPÄISCHE PATENTSCHRIFT

(45) Veröffentlichungstag der Patentschrift:
23.05.90

(51) Int. Cl.⁵: **D21D 5/02, D21B 1/32**

(21) Anmeldenummer: **87101567.3**

(22) Anmeldetag: **05.02.87**

(54) Sortiereinrichtung für Fasersuspensionen.

(30) Priorität: **18.02.86 DE 3605078**

(43) Veröffentlichungstag der Anmeldung:
**09.09.87 Patentblatt 87/37**

(45) Bekanntmachung des Hinweises auf die Patenterteilung:
**23.05.90 Patentblatt 90/21**

(84) Benannte Vertragsstaaten:
**AT BE CH DE ES FR GB IT LI NL SE**

(56) Entgegenhaltungen:
DE-A- 2 930 475
DE-A- 3 010 952
FR-A- 1 448 814
US-A- 3 530 986

**PULP AND PAPER MAGAZINE OF CANADA, Band 56, Nr. 9, August 1955, Seiten 127-129: "The Koehring-Waterous Hydrofoil Screen"**

(73) Patentinhaber: **J.M. Voith GmbH, Sankt Pöltener Strasse 43, D-7920 Heidenheim(DE)**

(72) Erfinder: **Meinecke, Albrecht, Hans-Holbein-Strasse 39, D-7920 Heidenheim(DE)**
Erfinder: **Musselmann, Walter, Franz-Marc-Strasse 32, D-7920 Heidenheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Sortiereinrichtung für Fasersuspensionen entsprechend dem Oberbegriff des Patentanspruchs 1. Eine solche Sortiereinrichtung ist aus der US-A 3 530 986 bekannt. Bei dieser Einrichtung ist das Sieb des ersten Gehäuseteils ein zylindrischer Siebkorb, dem horizontal Ablenkplatten mit zentralen Durchlaßöffnungen zugeordnet sind, und das Sieb des zweiten Gehäuseteils ist ein ebenes Sieb mit etwa dem 4fachen Außendurchmesser des Siebkorbes. Es werden dabei oszillierende und gyratorische Bewegungen zur Steigerung der Siebwirkung eingesetzt. Dies ist nachteilig, weil die Anordnung dadurch großen Beanspruchungen ausgesetzt wird. Auch ist es nachteilig, daß praktisch eine völlig drucklose Sortierung vorliegt und daß es schwierig ist, den verbleibenden Spuckstoff genügend schnell von dem ebenen Sieb zu entfernen, so daß ein wünschenswert großer Durchsatz nicht erzielt werden kann.

Weiterhin ist ein Sortierer einer Sortiereinrichtungen aus US-A 3 898 157 ekannt. Dieser Sortierer ist nicht als Endstufen-Sortierer entwickelt, da hier Verdünnungswasser am Ende der zweiten Sortierzone zugegeben wird und dort ein sehr enger Austrittsquerschnitt vorliegt. Dadurch ist es nicht möglich, daß Spuckstoff mit hoher Konsistenz diese Siebzone verläßt. Ferner ist auch in den Beschreibungsunterlagen angegeben, daß es darum geht, eine hohe Produktionsrate zu ermöglichen. Ferner ist auch angegeben, daß insbesondere Stippen oder Knoten aus der Fasersuspension entfernt werden sollen, was ein grundsätzlicher Hinweis darauf ist, daß im Verhältnis zur in der Endstufe anfallenden stark verschmutzten Suspension hier nur relativ leicht verschmutzte Fasersuspension vorliegt.

Die in der letzten Stufe einer Sortierung (z.B. Sortierung von Altpapier) eingesetzte Maschine hat die Aufgabe, den Störstoff (Spuckstoff) vom brauchbaren Fasermaterial zu trennen. Der Trennvorgang muß so erfolgen, daß einerseits ein möglichst geringer Faserverlust resultiert, andererseits jedoch ein möglichst hoher Störstoff-Abscheidewirkungsgrad erreicht wird. Bekanntlich bestimmt ja die letzte Sortierstufe den Wirkungsgrad der gesamten Sortierung.

Bekannte Endstufensortierer sind z.B. Vibrationssortierer. Diese Maschinen erfordern bei den notwendigen Sieblochungen relativ große Siebflächen und hohe Stoffverdünnungen, um überhaupt einen einigermaßen zufriedenstellenden Sortiereffekt zu erreichen. Dazu sind die Siebe sehr verstopfungsanfällig.

In den letzten Jahren wurden daher Endstufensortierer entwickelt, die diese Vibrationssortierer ersetzen sollen, bei gleichzeitig möglichst hohem Auswurftrockengehalt, wie z.B. in DE-A 30 06 482 beschrieben. Von Nachteil bei dieser Maschine ist der nur auf mittlere Reinheitsansprüche beschränkte Einsatz und der für reine Sortieraufgaben relativ hohe Energiebedarf.

Ein weiterer neuer Endstufensortierer ist der Rejektsortierer gemäß DE-A 32 38 742. Es handelt sich bei dieser Maschine ebenfalls um einen reinen Sortierer, d.h. ein Aufschlagen von häufig im Stoff befindlichen Papierstippen findet nur sehr unzulänglich statt. Bei eng (klein) perforierten Sortiersieben ist der Energieaufwand ebenfalls hoch und der Stoffverlust oft beträchtlich.

Die Aufgabe der Erfindung ist es, eine Sortiereinrichtung anzugeben, wobei insbesondere der Spuckstoff in der Endstufe abgeschieden werden und dabei die Faserverluste klein gehalten werden sollen, wobei ferner eine kontinuierliche Betriebsweise und dazu auch ein kontinuierlicher Abzug der leichten Verunreinigungen möglich und eine hohe Spuckstoffkonsistenz erreichbar sein soll.

Diese Aufgabe wird erfindungsgemäß bei einer Einrichtung der eingangs angegebenen Art durch die Merkmale des kennzeichnenden Teils des Patentanspruchs 1 gelöst.

Nachfolgend wird die Erfindung anhand der in den Figuren dargestellten Ausführungsbeispiele erläutert, wobei die Figuren jeweils Längsschnitte der Maschinen im Prinzip zeigen und die zugehörigen Figuren mit dem Index a jeweils einen Querschnitt der entsprechenden Darstellung im Längsschnitt zeigen.

Es ist bereits durch die DE-A 30 10 952 eine Sortiereinrichtung beschrieben, die wichtige Einzelheiten zu dem dem ersten Gehäuseteil 1 mit dem größeren Durchmesser zugeordneten Rotorteil zeigt. Jedoch ist die Ausführung nicht auf diese Einzelheiten festgelegt. Für den anderen, dem zweiten Gehäuseteil 2 mit dem kleineren Durchmesser zugeordneten Rotorteil können wichtige Einzelheiten aus der DE-A 29 30 475 entnommen werden. Auch die bereits genannte DE-A 30 06 482 gibt hierzu mögliche Ausführungsformen an. Die entsprechenden Einzelheiten des Rotors sind daher in den Darstellungen nur angedeutet. Die Maschine weist ein Gehäuse auf, das im wesentlichen zylindrisch aufgebaut ist und ein Gehäuseteil 1 mit einem relativ großen Durchmesser D und einem Gehäuseteil 2 mit relativ kleinerem Durchmesser d aufweist. Dabei ist das Verhältnis der Gehäusedurchmesser bzw. Siebdurchmesser $D/d = 1,5$ bis $4$. Da hier das radiale Druckgefälle im Gehäuseteil 1 ausgenutzt werden soll, liegen die praktischen Ausführungsformen mehr in Richtung zu den größeren Werten. Der Einlauf zur Maschine erfolgt bei 3 im wesentlichen tangential am Umfang des Gehäuseteils 1 in einen als scheibenförmigen Umwälzraum 5 ausgebildeten, ersten Siebraum hinein, in welchem der laufradartige Teil 7 des Rotors dicht neben einem Sieb 8 angeordnet ist. Strömungsmäßig hinter dem Sieb 8 befindet sich ein Gutstoffraum 4, aus dem die gereinigte Fasersuspension durch den Stutzen 14 abgezogen wird. Das Verhältnis der Breite $b_l$ des Umwälzraumes 5 zum Durchmesser D des Gehäuseteils 1 liegt dabei vorzugsweise zwischen 0,1 und 0,3, wobei der größere Wert auf keinen Fall überschritten werden sollte. Der Rotor 6 weist eine Welle 18 auf, über die er bei 19 gelagert ist, und er wird angetrieben über Motor 21.

Auf der anderen Seite schließt sich an den Umwälzraum 5 der Siebraum 12 des zweiten Gehäuseteils 2 an, der zwischen einem trommelartigen Fortsatz 9 des Rotors und einem zylindrischen Siebkorb 11 gebildet ist. Dabei trägt der Trommelteil 9 Sortierelemente in Form von Profilen oder Tragflügeln 12, deren Kontur so ausgebildet ist, daß sie radial nur mit geringem Abstand zum Siebkorb 11 verläuft. Vorzugsweise erzeugen die Sortierelemente 16 Förderkomponenten zum Auslaßende 17 des Siebraumes hin, um den Spuckstoff herauszubefördern. Der durch die Perforation des Siebkorbes 11 hindurchgetretene Gutstoff wird durch Stutzen 20 abgeführt.

Um die Entstippungswirkung im Gehäuse 1 zu erhöhen, können in bekannter Weise Leisten, z.B. in Form von Schweißraupen, auf das Sieb 8 auf der dem Laufrad 7 zugewandten Seite angebracht werden. Eine zusätzliche Entstippungswirkung kann durch kranzförmig um das Laufrad herum angeordnete Statorelemente 15 bewirkt werden.

Um eine Stauwirkung beim Übertritt vom Umwälzraum 5 zum Siebraum 12 zu erreichen, ist eine Förderschnecke 28 auf dem Trommelteil 9 vorgesehen, deren Förderwirkung in Richtung auf das Sieb 8 gewählt ist. Dadurch ist ausreichend Zeit gegeben, daß die Faserbündel entstippt bzw. Papierfetzen zerlegt werden.

Die Lochungen der Perforation werden in bezug auf das Sieb 8 vorzugsweise zwischen 1,0 und 3,0 mm Durchmesser und für die Perforation des Siebkorbes 11 zu 0,6 bis 1,5 mm Durchmesser bzw. im Fall von Schlitzen zu 0,2 bis 0,8 für das Sieb 8 und zu 0,15 bis 0,8 mm für den Siebkorb 11 gewählt. Dabei kann auch der trommelartige Teil 9 in Richtung von der an diesem Teil 9 befindlichen Stirnwand des Gehäuseteils 1 zum Laufrad 7 hin mit abnehmendem Durchmesser ausgeführt werden. Hierdurch erhöht sich der radiale Druckunterschied. Dieser radiale Druckunterschied bewirkt die Förderung bzw. den Übertritt der Suspension vom Umwälzraum 5 in den Siebraum 12 hinein. Hierbei sammeln sich im Zentrum, also nahe an dem trommelartigen Teil 9 vorzugsweise leichte Verunreinigungen an, die hier jedoch unmittelbar durch den Gehäuseteil 2 abgeschieden werden. Dies ist ein großer Vorteil, da sie nicht lange im Umwälzraum 5 verbleiben und somit den Sortiervorgang nicht behindern können und auch nicht selbst zerkleinert werden.

Natürlich besteht der weitere große Vorteil, daß nur ein einziger Antrieb benötigt wird, wie schon frühere Anlagen mit mehreren Sortiereinrichtungen ausgestattet werden mußten, die natürlich jeweils einen eigenen Antrieb erforderten. Vorteilhaft ist hier auch, daß eine praktisch kontinuierliche Betriebsweise vorliegt, indem Waschwasser durch Leitungen 22 und wie durch den strichpunktierten Pfeil angedeutet, dem Siebraum 12 zugeführt wird, so daß der Spuckstoff kontinuierlich vom Faseranteil getrennt und ausgetragen werden kann.

Eine einfache Steuermöglichkeit für den Übertritt der Suspension vom Umwälzraum 5 zum Siebraum 12 besteht durch die Drehzahl des Rotors, da hierdurch ja das radiale Druckgefälle beeinflußt wird. Dieses kann z.B. 5 bis 8 m WS betragen, so daß in der Nähe des trommelartigen Teils 9 nur noch ein Druck von 1 bis 2 m WS herrscht, wenn man etwa einem Bar die Suspension bei 3 in den Gehäuseteil 1 einleitet. Dabei wird die Suspension vorzugsweise tangential am Umfang zugeführt. Desgleichen kann das Übertrittsdruckgefälle durch das Druckniveau selbst beeinflußt werden.

Vorzugsweise wäre die senkrechte Anordnung der Rotorwelle vorzusehen, da dann der Gegenstau am Austrittsende 17 des Trommelteils 9 sich günstig für den Sortiereffekt bzw. die Spuckstoffabscheidung auswirken kann und ein hoher Auswurftrockengehalt erreicht wird.

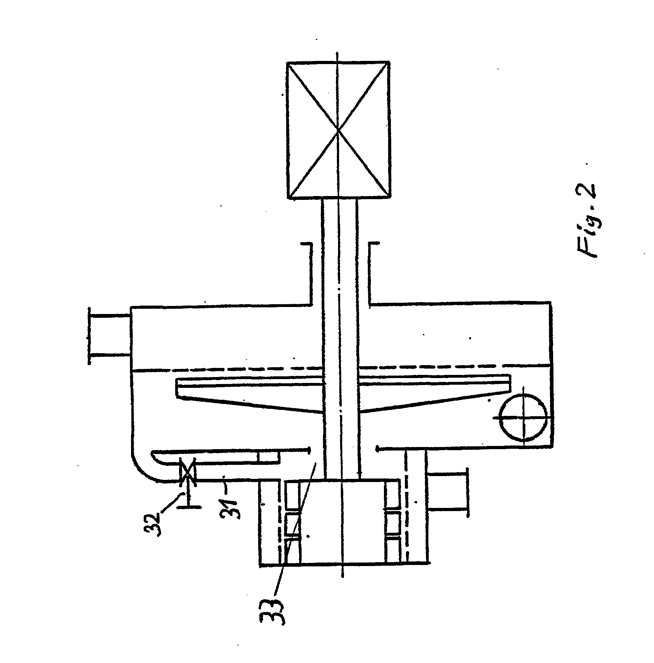

Die spezifisch schweren Bestandteile, insbesondere schwere Verschmutzungen neigen dazu, sich an der Peripherie des Gehäuseteils 1 anzusammeln. Daher ist gemäß Figur 2 eine Rückleitung 31 vorgesehen, die mittels Ventil 32 z.B. periodisch geöffnet werden kann, um diese Schmutzanteile in den Gehäuseteil 2 zurückzuführen. Dabei mündet die Leitung 31 in den Gehäuseteil 2 hinter einer Blende 33, die den Umwälzraum 5 von dem Gehäuseteil 2 trennt. Auf diese Weise können dann die schweren Verschmutzungen ebenfalls kontinuierlich abgeschieden werden, was ein großer Vorteil ist. Bekannte Schleusen erfordern ja immer erstens mehr konstruktiven Aufwand und zweitens zusätzliches Verdünnungswasser, um die Schleuse zu reinigen.

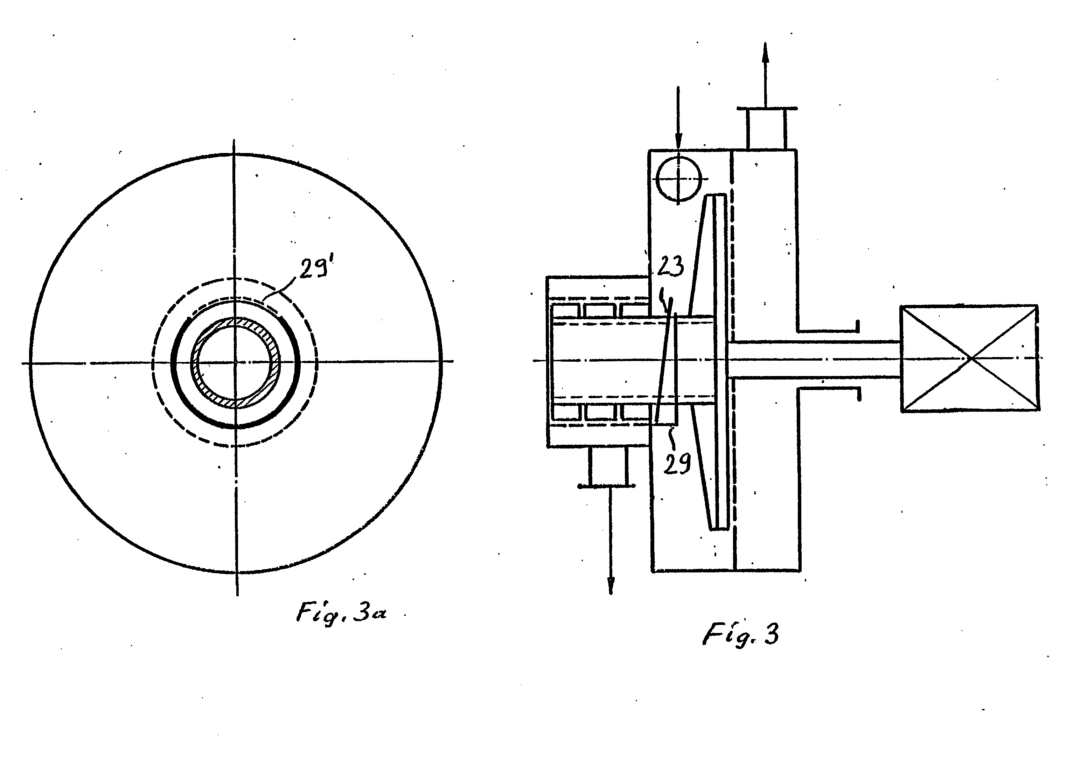

Bei der Ausführungsform gemäß Figur 3 und 3a ist eine Taumelscheibe 23 vorgesehen, die in einem kleinen Zusatzgehäuse 29 rotiert und an dem Trommelteil 9 befestigt ist. Sie ruft einerseits eine Stauwirkung hervor, da sie mit dosierter Förderwirkung die Suspension aus dem Umwälzraum 5 in den Siebraum 12 überleitet. Dabei ist das Zusatzgehäuse 29 im wesentlichen ein Zylinder, der in seinem oberen Bereich bei 29' abgeschnitten ist. Durch eine in ihrer Neigung verstellbare Taumelscheibe 23 könnte dann auch eine Regulierung bzw. Anpassung an die Verhältnisse erreicht werden.

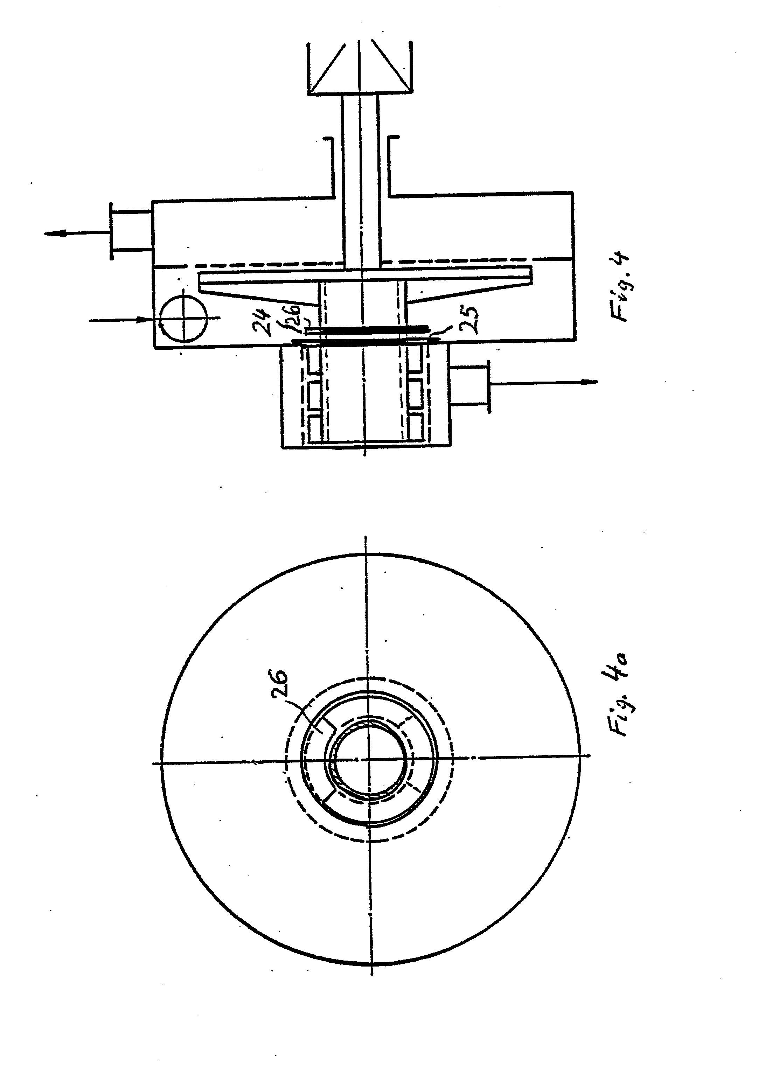

Gemäß Figur 4 und 4a ist eine Variante gewählt, bei der eine feststehende Scheibe und eine rotierende Scheibe 24 mit entsprechender Aussparung 26 als Blende für einen gesteuerten Übertritt der Suspension sorgen.

Die beschriebene Sortiereinrichtung kann sowohl die erste Grobsortierstufe bei kleineren Tagesproduktionen als auch eine spätere Grobsortierstufe bei größeren Tagesproduktionen sein. Im zweiten Fall wäre sie dann in einem Nebenkreis anzuordnen.

Der Einsatzbereich der Sortiereinrichtung ist selbstverständlich nicht nur auf Grobsortieraufgaben beschränkt; die Maschine kann auch für mittlere Feinsortieraufgaben Verwendung finden. Die Feinsortierung findet natürlich bei den eingangs angegebenen Minimalwerten der Siebschlitze statt oder zumindest wenig darüber.

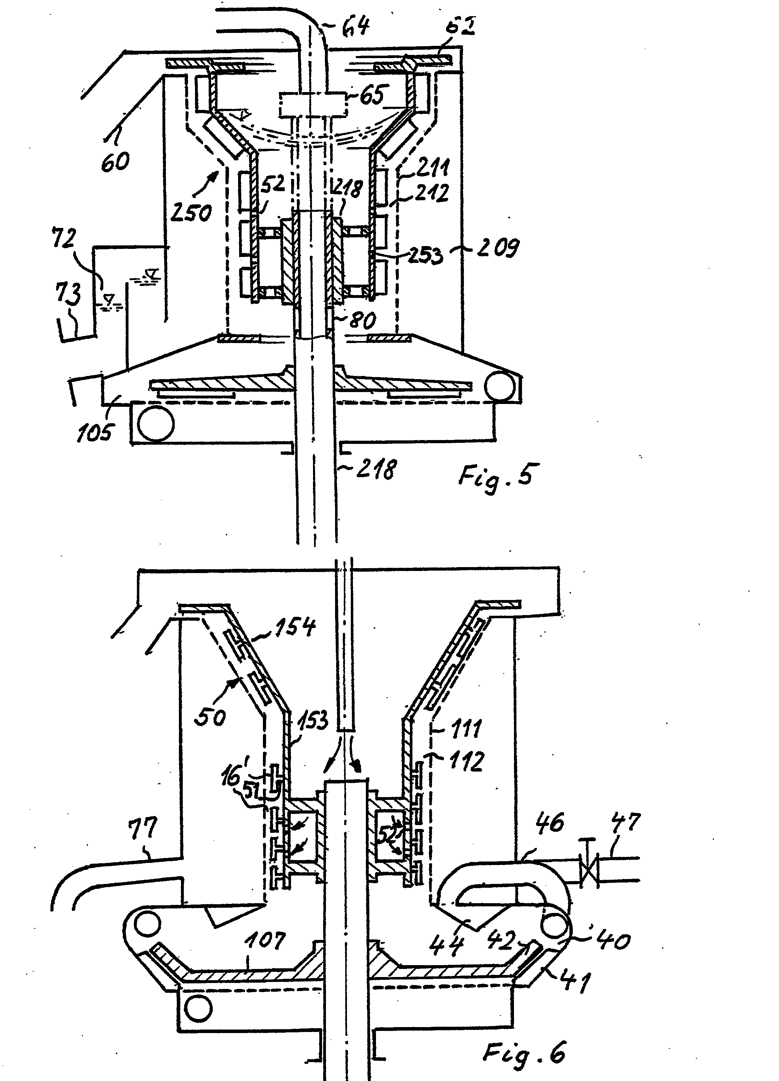

In Figur 5 ist eine Variante des Endstufensortierers dargestellt, bei dem der im Bereich des zweiten Siebes 211 befindliche Rotorteil 250 hohl ausgeführt ist und eine Umfangswand 253 aufweist, die mit Spritzbohrungen 52 versehen ist, um Verdünnungswasser in den zweiten Siebraum 212 einzuleiten. Die Rotorwelle 218 ist dabei hohl ausgeführt, so daß weiteres Verdünnungswasser in den Übergangsbereich zwischen dem ersten Siebraum 105 und dem zweiten Siebraum 212 eingeleitet werden kann. Dazu weist die Rotorwelle Öffnungen 80 auf. Das Spritzwasser wird mittels Leitung 64 zugeführt.

Strichpunktiert ist angedeutet, daß das Spritzwasser auch unter Druck mittels einem z.B. in der DE-A-30 06 482 beschriebenen Spritzwasseranschlußkopf 65 zugeführt werden kann.

Hierbei ist weiterhin das zweite Sieb 211 in seinem oberen Bereich gegenüber seinem unteren Bereich im Durchmesser vergrößert, was auch für den entsprechenden Rotorteil gilt, so daß hier die Sortierelemente 16 auf einem größeren Durchmesser mit größerer Umfangsgeschwindigkeit rotieren und somit eine bessere Entwässerungswirkung auf den Spuckstoffkuchen ausgeübt wird. Eine Schleuderscheibe 62 wirft dann den Spuckstoffkuchen in den Spuckstoffkanal 60 aus.

Es ist noch eine Stauwand 71 dargestellt, die dem hinter das zweite Sieb 211 geschalteten Gutstoffraum 209 zugeordnet ist und den Gutstoff in eine Gutstoffabzugskammer 72 einleitet, von wo dieser dann über Abzugsleitung 73 abgezogen wird.

Bei der Ausführungsform nach Figur 6 ist die Durchmesservergrößerung des dem zweiten Siebraum 112 zugeordneten Rotorteils 50 durch eine konische Ausbildung des oberen Teils 154 des Rotorteils vorgenommen worden. Hierbei sind die Sortierelemente als Hydrofoils 16′ ausgebildet, die von Stegen 51 an der Trommelumfangswand 153 gehalten sind. Spritzbohrungen 52 finden sich vorzugsweise in diesem Fall direkt im Bereich dieser Hydrofoils 16′, und zwar vorzugsweise in Drehrichtung hinter den Stegen 51. Hierdurch kann auch bei druckloser Spritzwasserzuführung ein Verstopfen dieser Spritzbohrungen weitgehend vermieden werden.

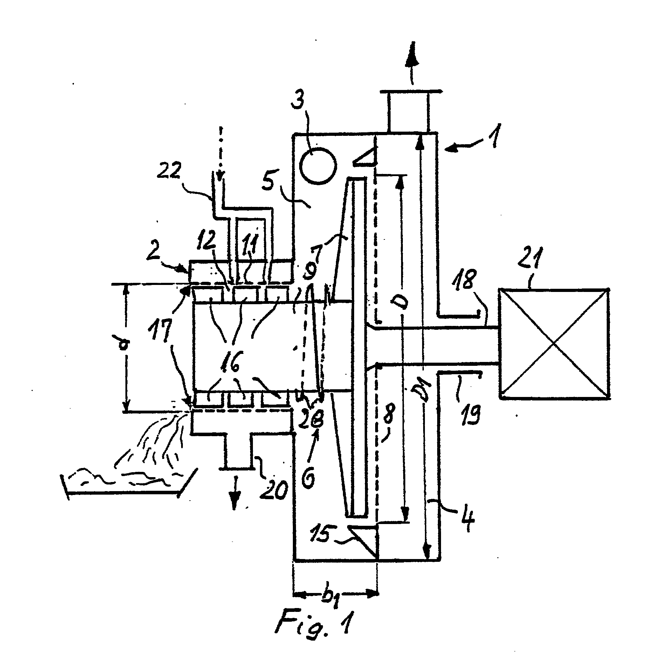

Der Rotor 107 des ersten Siebraumes 205 weist radial außen Entstippungselemente 42 auf, die mit feststehenden Entstippungselementen 41 zusammenarbeiten, welche vorzugsweise als Rippen ausgebildet sind. Auch hier ist wie bei Figur 1 und den vorangehenden Figuren der Rotor 107 laufradartig mit einzelnen radialen oder zykloidisch geformten Armen ausgebildet.

Es wird nun durch Rippen 44 für eine Zirkulation der Suspension in der entstandenen Entstippungszone 40 gesorgt. Um eine zu hohe Eindickung hier zu vermeiden, wird durch Leitung 46, an die noch eine Wasserzufuhrleitung 47 angeschlossen sein kann, eine Rezirkulation der Fasersuspension bewirkt. Hierdurch kann eine sehr weitgehende Entstippungswirkung erzielt werden.

Der Abzug des Gutstoffs aus dem dem zweiten Siebraum 112 nachgeschalteten Gutstoffraum 109 erfolgt über Leitung 77.

Erfindungsgemäß ist durch die hintereinandergeschalteten, direkt an den Rotoren gelegenen, diesen benachbarten Siebräume eine sehr gute Faserabtrennung vom Spuckstoff und ein hoher Feststoffgehalt des Spuckstoffs am Austritt der Sortiereinrichtung möglich. Die Konsistenz dort beträgt vorzugsweise mehr als 15 oder 20 %. Der Restfasergehalt in dem Spuckstoff ist nur noch sehr gering.

**Patentansprüche**

1. Sortiereinrichtung für Fasersuspensionen, insbesondere solchen aus Altpapier, insbesondere sogenannter Endstufensortierer der stark verschmutzten Reject-Fraktion der Altpapier-Aufbereitung, mit im wesentlichen rotationssymmetrischem Gehäuse, mit zwei verschiedenen, ineinander übergehenden, rotationssymmetrischen Gehäuseteilen (1, 2) mit verschiedenem Durchmesser, von denen das Gehäuseteil mit dem größeren Durchmesser ein im wesentlichen ebenes Sieb (8) im wesentlichen senkrecht zur Rotationssymmetrieachse der Gehäuseteile aufweist, das einen Gutstoffraum (4) von einem Umwälzraum (5) trennt, und das Gehäuseteil (2) mit dem kleineren Durchmesser einen Siebkorb (11) aufweist, der konzentrisch zum Gehäuseteil angeordnet ist und der diesen Gehäuseteil in einen Sortierraum (12) und einen Gutstoffraum (13) trennt, gekennzeichnet durch einen Rotor (6) mit einem den Gehäuseteil (1) mit dem größeren Durchmesser zugeordneten Laufrad (7, 107), dessen Sortierelemente dicht neben dem Sieb im Umwälzraum (5, 105) rotieren und einen dem Gehäuseteil (2) mit dem kleineren Durchmesser zugeordneten Trommelteil (9, 50, 250), das an seinem Umfang als Sortierflügel oder -leisten ausgebildete Sortierelemente (16, 16′) aufweist, wobei der Trommelteil (9, 50, 250) von dem Siebkorb (11, 111, 211) radial umschlossen ist und der kleinere Gehäuseteil (2) an der vom Laufrad (7, 107) abgewandten Seite im wesentlichen offen ist, und der Einlaß (3) zu der gesamten Gehäuseeinheit am Umwälzraum (5, 105) des größeren Gehäuseteils (1) vorgesehen ist.

2. Sortiereinrichtung nach Anspruch 1, dadurch gekennzeichnet, daß beim ersten, scheibenförmigen Siebraum (5, 105) das Verhältnis der Breite ($b_I$) zum Durchmesser ($D_I$) 0,1 bis 0,3 beträgt.

3. Sortiereinrichtung nach Anspruch 1, dadurch gekennzeichnet, daß die Rotordrehachse senkrecht angeordnet ist und der zweite Siebraum (12, 112, 212) oberhalb des ersten (5, 105, usw.) angeordnet ist.

4. Sortiereinrichtung nach einem der Ansprüche 1 bis 3, dadurch gekennzeichnet, daß die Rotorwelle (218) hohl ausgeführt ist zur Zuführung von Verdünnungswasser zum dem ersten Siebraum (5 usw.) benachbarten Ende des zweiten Siebraumes (12 usw.).

5. Sortiereinrichtung nach einem der Ansprüche 1 bis 4, dadurch gekennzeichnet, daß der Durchmesser des Siebes (111) des zweiten Siebraumes (112) zum Austrittsende des Spuckstoffs hin allmählich oder sprunghaft zunimmt.

6. Sortiereinrichtung nach einem der Ansprüche 1 bis 5, gekennzeichnet durch den Übertritt von Suspension aus dem ersten Siebraum (11 usw.) zum zweiten Siebraum (2) steuernde Mittel.

7. Sortiereinrichtung nach Anspruch 6, dadurch gekennzeichnet, daß die mechanische Steuereinrichtung eine Blende (24, 26; 33) ist, die die Strömung und somit den Druckabfall steuert.

8. Sortiereinrichtung nach Anspruch 7, dadurch gekennzeichnet, daß die Blende (24, 26) verstellbar ist.

9. Sortiereinrichtung nach Anspruch 7, dadurch gekennzeichnet, daß die mechanische Steuereinrichtung als eine rotierende (24) und eine feststehende Lochscheibe (25) mit einander zugeordneten Öffnungen (26, 27) ausgebildet ist.

10. Sortiereinrichtung nach Anspruch 7, dadurch gekennzeichnet, daß die Steuereinrichtung als Förderschnecke (28) ausgebildet ist.

11. Sortiereinrichtung nach einem der Ansprüche 1 bis 10, dadurch gekennzeichnet, daß das Verhältnis der Durchmesser (D) des Siebes (8) des großen Gehäuseteils zum Durchmesser (d) des Siebes (11) des kleinen Gehäuseteils D/d = 1,5 bis 4 beträgt.

12. Sortiereinrichtung nach Anspruch 1 oder einem der Ansprüche 3 bis 11, dadurch gekennzeichnet, daß im Peripheriebereich des ersten Siebraumes (205) radial außerhalb des scheibenförmigen Siebes (8) eine Entstippungselemente (41, 42) aufweisende Entstippungszone (40) gebildet ist.

13. Sortiereinrichtung nach Anspruch 12, dadurch gekennzeichnet, daß Umlenkrippen (44) auf der dem Sieb (8) gegenüberliegenden Wand des ersten Siebraumes (205) zur Umlenkung des in der Entstippungszone (40) zirkulierenden Stoffstromes hin zum Sieb (8) angeordnet sind und daß eine Zirkulationsleitung (46) von der Entstippungszone (40) zum genannten Wand bereich radial innerhalb der Rippen (44) geführt ist.

14. Sortiereinrichtung nach Anspruch 13, dadurch gekennzeichnet, daß an die Zirkulationsleitung (46) eine Wasserleitung (47) angeschlossen ist.

15. Sortiereinrichtung nach einem der vorangehenden Ansprüche, dadurch gekennzeichnet, daß die Sortierelemente des zweiten Siebraumes (112, 212) als Hydrofoils (16') ausgebildet sind, die von Stegen (51) getragen sind, und daß Spritzbohrungen (52) im Bereich der Sortierelemente (16') in Drehrichtung hinter den Stegen (51) in der Umfangswand (253, 153) des hohl ausgebildeten Rotors (50) vorgesehen sind.

**Claims**

1. A screening means for removing impurities from fibrous suspensions, especially those produced from waste paper, especially for the so-called final-stage screens for the heavily contaminated reject fraction in the processing of waste paper, essentially comprising an axially symmetrical casing having two separate communicating axially symetrical casing parts (1, 2) of differing diameter, of which the casing part with the greater diameter being provided with an essentially flat screen (8) essentially at right-angles to the axially symetric casing parts and separating a circulation chamber (5) from a purified-suspension chamber (4), and of a casing-part (2) with a smaller diameter having a screen basket (11) concentric with the casing part and dividing this casing part into a screening chamber (12) and a purified-suspension chamber (13), characterized by a rotor (6) having an impeller (7, 107), located in the casing part (1) with the greater diameter, the screening elements of said impeller being arranged to rotate close against the screen in the circulation chamber (5, 105) and a drum part (9, 50, 250), associated with the casing part (2) having the smaller diameter, being fitted with screening elements (16, 16') the form of vanes or bars around its periphery, whereby the drum part (9, 50, 250) is enclosed radially by a screen basket (11, 111, 211) and the casing part (2) of smaller diameter, and by the end of the smaller casing part (2) opposite to that that faces the impeller (7, 107) being essentially open and by the inlet (3) to the entire casing unit being into the circulation chamber (5, 105) of the larger-diameter casing part (1).

2. A screening means in accordance with claim 1, characterized by the first shallow circular screening chamber (5, 105) having a width (b1) to diameter (D1) ratio of 0.1 to 0.3.

3. A screening means in accordance with claim 1, characterized by the rotor axis being vertical and the second screening chamber (12, 112, 212) being above the first (5, 105, etc.).

4. A screening means in accordance with claims 1 to 3, characterized by the rotor shaft (218) being made hollow for the feeding of dilution water to the end of the second screening chamber (12, etc.) adjacent to the first screening chamber (5, etc.).

5. A screening means in accordance with claims 1 to 4, characterized by the diameter of the screen (111) of the second screening chamber (112) increasing in diameter in the direction of the reject-material outlet either or discontinuously or continuously.

6. A screening means in accordance with claims 1 to 5, characterized by the provision of means to control the transfer of suspension from the first screening chamber (11, etc.) to the second screening chamber (2).

7. A screening means in accordance with claim 6, characterized by the mechanical control means being an orifice (24, 26, 33) to control the flow of suspension and thus the pressure gradient.

8. A screening means in accordance with claim 7, characterized by the size of the orifice (24, 26) being adjustable.

9. A screening means in accordance with claim 7, characterized by the control means comprising a rotating disc (24) and a fixed disc (25) with inter-related openings (26, 27).

10. A screening means in accordance with claim 7, characterized by the control means being in the form of a feeding screw (28).

11. A screening means in accordance with claims 1 to 10, characterized by the diameter (D) of the screen (8) of the larger casing part being related to the diameter (d) of the screen of the smaller casing part in the ratio D/d = 1.5 to 4.

12. A screening means in accordance with claim 1 or one of the claims 3 to 11, characterized by the peripheral region of the first screening chamber (205) forming a deflaking zone (40) with deflaking elements (41, 42) beyond the circumference of the disc-shaped screen (8).

13. A screening means in accordance with claim 12, characterized by diverter ribs (44) on the wall of the first screening chamber (205) opposite to the screen (8) as a means of diverting the circulating flow of fibrous suspension in the deflaking zone (40) in the direction of the screen (8) and by a circulation pipe (46) being provided to lead radially from the deflaking zone (40) to the mentioned wall region on the inside of the ribs (44).

14. A screening means in accordance with claim 13, characterized by a water supply pipe (47) being connected to the circulation pipe (46).

15. A screening means in accordance with one of the previous claims, characterized by the screening elements of the second screening chamber (112, 212) being in the form of hydrofoils (16') carried on webs (51), and by spray holes (52) being provided in the peripheral wall (253, 153) of the hollow rotor (50) in the region of the screening elements (16') to the rear of the webs (51) in the direction of rotation.

## Revendications

1. Appareil de tamisage pour fibres en suspension, en particulier pour celles provenant de vieux papiers, en particulier celui des-dits assortisseurs d'étages finals de la «Reject-Fraction» du traitement du vieux papier avec essentiellement un carter de rotation symétrique avec deux parties de carters différents avec deux parties de carters différents (1, 2) allant l'une dans l'autre, de diamètre différent, desquelles la partie de carter avec le plus grand diamètre présente un tamis (8) perpendiculaire à l'axe de symétrie de rotation des parties de carter, qui sépare une chambre de pâte à papier finie (4) d'une chambre de circulation (5) et que la partie de carter (2) avec le petit diamètre présente un panier-tamis (11), qui est disposé concentriquement par rapport à la partie de carter et qui divise cette partie de carter en une chambre de tamisage (12) et une chambre de pâte à papier finie (13), caractérisé par un rotor (6) avec une roue tournante (7, 107) afférente à la partie de carter (1) avec le grand diamètre dont les éléments de triage tournent tout contre le tamis dans la chambre de circulation (5, 105) et une partie de tamour (9, 50, 250) afférente à la partie de carter (2) avec le petit diamètre, qui présente à son pourtour des éléments de tamisage sous forme d'ailettes ou de barres de séparation (16, 16'), la partie de tambour (9, 50, 250) étant enveloppée radialement du panier-tamis (11, 111, 211) et que la petite partie de carter (2) est essentiellement ouverte du côté opposé à la roue mobile (7, 107), et que l'entrée (3) d'accès à l'ensemble de l'unité de carter est prévue au droit de la chambre de circulation (5, 105) de la grande partie de carter (1).

2. Appareil de tamisage suivant la revendication 1, caractérisé par le fait que pour la première chambre de tamis en forme de disque (5, 105), le rapport de la largeur (b) au diamètre (D) est de 0, 1 à 0, 3.

3. Appareil de tamisage suivant la revendication 1, caractérisé par le fait que l'arbre du rotor est disposé perpendiculairement et que la deuxième chambre de tamis (12, 112, 212) est disposée au dessus de la première (5, 105, etc.).

4. Appareil de tamisage suivant les revendications 1 à 3, caractérisé par le fait que l'arbre du rotor (218) est creux, pour l'aduction d'eau de dilution vers l'extrémité de la deuxième chambre de tamis (12, etc.), voisine de la première chambre de tamis (12, etc.).

5. Appareil de tamisage suivant les revendications 1 à 4, caractérisé par le fait que le diamètre du tamis (111) de la deuxième chambre de tamis (112) augmente progressivement, pour par bonds, vers l'extrémité de sortie du refus.

6. Appareil de tamisage suivant l'une des revendications 1 à 5, caractérisé par le fait des moyens de commande du passage de la suspension en provenance de la première chambre de tamis (11, etc.) vers la deuxième chambre de tamis.

7. Appareil de tamisage suivant la revendication 6, caractérisé par le fait que le dispositif de commande mécanique est un diaphragme (24, 26, 33) qui commande le flux et donc la chute de pression.

8. Appareil de tamisage suivant la revendication 7, caractérisé par le fait que le diaphragme (24, 26) est réglable.

9. Appareil de tamisage suivant la revendication 7, caractérisé par le fait que le dispositif de commande mécanique est formé par un disque perforé tournant (24) et un autre fixe (25) avec des ouvertures afférentes les unes aux autres (26, 27).

10. Appareil de tamisage suivant la revendication 7, caractérisé par le fait que le dispositif de commande est formé par une vis sans fin de transport (28).

11. Appareil de tamisage suivant l'une des revendications 1 à 10, caractérisé par le fait que le rapport des diamètres (D) du tamis (8) de la grande partie du carter au diamètre (d) du tamis de la petite parte du carter, est D/d = 1, 5 jusqu'à 4.

12. Appareil de tamisage suivant la revendication 1 ou l'une des revendications 3 à 11, caractérisé par le fait que dans l'étendue de la première chambre de tamis (205) est située une zone de dépastillage (4P), radialement et extérieurement au tamis en forme de disque (8) et présentant des éléments de dépastillage (41, 42).

13. Appareil de tamisage suivant la revendication 12, caractérisé par le fait que des nervures de déflexion (44) sont disposées sur la paroi de la première chambre de tamis (205) situé en face du tamis (8) pour la déviation du courant de pâte circulant dans la zone de dépastillage (40) et qu'une conduite de circulation (46) est posée à partir de la zone de dépastillage (40) vers l'étendue de paroi déjà citée à l'intérieur des nervures (44).

14. Appareil de tamisage suivant la revendication 13, caractérisé par le fait qu'une conduite d'eau (47) est branchée sur la conduite de circulation (46).

15. Appareil de tamisage suivant l'une des revendications ci-dessus, caractérisé par le fait que les éléments de tamisage de la deuxième chambre de tamis (112, 212) sont formés en hydrofoils (16') que supportent des entretoises (51) et que des perçages de projection (52) sont prévus dans le domaine des éléments de tamisage (16') dans le sens de rotation, derrière les entretoises (51) dans la paroi de pourtour (253, 153) du rotor (50) construit en creux.

Fig. 1

Fig.2

EP 0 235 605 B1

Fig. 3

Fig. 3a

Fig. 4a

Fig. 4

EP 0 235 605 B1

Fig.5

Fig.6